# EUROPEAN PATENT APPLICATION

(11) **EP 4 763 326 A1**
(43) Date of publication of application: **24.06.2026**
(21) Application number: 24220861.9
(22) Date of filing: 18.12.2024
(51) Int. Cl.: B01J 8/00, B01J 8/06, B01J 19/00, B01J 19/24

(54) **APPARATUS AND METHOD FOR HEATING A GAS**

(71) Applicant: Linde GmbH, 82049 Pullach (DE); Selas-Linde GmbH, 82049 Pullach (DE)
(72) Inventor: Mayerhofer, Matthias, 82256 82256 Fürstenfeldbruck (DE); Lemme, Volkmar, 80997 München (DE); Hofstaetter, Martin, 81369 München (DE); Rößler, Felix, 81379 München (DE); Hoefel, Torben, 81543 München (DE)
(74) Representative: Lu, Jing

(57) **Abstract**

An apparatus (100, 200) for heating a gas is proposed, the apparatus (100, 200) comprising a heating chamber (10) and heating tubes (11, 12, 13), wherein each of the heating tubes (11, 12, 13) comprises an inlet section (11a, 12a, 13a), an outlet section (11c, 12c, 13c) and an intermediate section (11b, 12b, 13b), wherein the intermediate sections (11b, 12b, 13b) of the heating tubes (11, 12, 13) are arranged within the heating chamber (10), wherein the outlet sections (11c, 12c, 13c) of the heating tubes (11, 12, 13) are electrically interconnected by an electrically conducting interconnection (20) element, wherein the inlet sections (11a, 11b, 11c) of the heating tubes (11, 12, 13) are electrically connected to different phases (L1, L2, L3) of a multiphase electric current, and wherein the inlet sections (11a, 12a, 13a) of the heating tubes (11, 12, 13) are fluidly connected to, and electrically isolated from, upstream tube sections (11d, 12d, 13d) by electrically insulating fluid connectors (11e, 12e, 13e) providing a galvanic separation of the inlet sections (11a, 12a, 13a) of the heating tubes (11, 12, 13) and the upstream tube sections (11d, 12d, 13d). Corresponding methods are also proposed.

## Description

### Field

The present disclosure relates to an apparatus and a method for heating a gas according to the preambles of the independent claims.

### Background

Certain processes of the chemical industry include passing one or more reactants through heated reaction tubes and catalytically or non-catalytically converting the reactants in the reaction tubes. Heating serves, in such processes, in particular to overcome the activation energy required for the chemical reaction. The reaction as a whole can be endothermic but also, after overcoming the activation energy via said heating within, and upstream of, the reaction tubes, exothermic.

Examples of such processes include steam cracking, various reforming processes, in particular steam reforming, dry or carbon dioxide reforming, mixed reforming processes, processes for dehydrogenation of alkanes and others. In steam cracking, the reaction tubes are typically passed through the reactor in the form of so-called coils that comprise at least one reverse bend in the reactor, whereas in steam reforming, straight tubes without reverse bends are typically used.

Embodiments as proposed herein are, however, not limited to the specific type of reaction or reaction tube arrangement, nor are they even limited to methods or apparatus for performing chemical reactions. Embodiments as proposed herein may also include gas heaters, e.g. for heating gases upstream of apparatus for direct reduction of iron oxide, or other gas heating applications as discussed in detail below. For this reason, terminology such as "apparatus for heating a gas", "method for heating a gas" and "heating tubes" are used herein, and heating a gas, or using an apparatus or a method as proposed herein, may include subjecting the gas to a reaction within the heating tubes or in downstream parts of the apparatus or method steps.

Currently, there is an increasing demand for operating apparatus for heating gases with reduced (local) carbon dioxide emissions. In this connection, a complete or partial electrification of such apparatus has been proposed, the term "electrification" referring to a complete or partial substitution of fuel gas heating using burners by electric heating using electric heating arrangements of any type conceivable.

There is still a need for improvements in electrification of apparatus of the type described in terms of efficiency, safety and/or ease of realisation.

### Summary

According to the present disclosure, an apparatus and a method for heating a gas including the features of the independent claims is proposed. Embodiments are the subject of the dependent claims and of the description that follows.

The proposed apparatus for heating a gas comprises a heating chamber and heating tubes, wherein each of the heating tubes comprises an inlet section, an outlet section and an intermediate section arranged between the inlet section and the outlet section, wherein the intermediate sections of the heating tubes are arranged within the heating chamber, wherein the outlet sections of the heating tubes are electrically interconnected by an electrically conducting interconnection element, wherein the inlet sections of the heating tubes are electrically connected to different current connectors of an electric power supply, and wherein the inlet sections of the heating tubes are fluidly connected to, and electrically isolated from, upstream tube sections by electrically insulating fluid connectors providing a galvanic separation of the inlet sections of the heating tubes and the upstream tube sections.

Details of the proposed solution and its advantages are discussed below. They include, inter alia, an advanced configurability of the heating tubes. For example, different sections of the heating tubes may be provided with different wall thicknesses or other parameters influencing the resistance of the tube walls, as there is no need to split the electrical current between two parallel electrical branches such as in more conventional solutions. Such conventional solutions include electrical interconnections or "star bridges" at the inlet and outlet sections and a current feed at the centre of the intermediate sections. Therefore, in such conventional solutions, a current flow to the electrical interconnections or "star bridges" in preferably essentially identical proportions has to be realized. Furthermore, in the solutions proposed herein, the current supply at the inlet sections may still be performed at relatively moderate temperatures such that materials may be used for the design of the electric power supply and/or the electrical connection to the heating tubes which are cheaper and easier to be machined. Heat losses, especially by thermal conduction from the heating tube into the electrical connector and into the electric power supply, are also reduced by placing the electrical current supply as proposed herein.

In certain embodiments as proposed herein, the power supply is a multiphase electric power supply as further explained below. In this case, the different electric connectors are different phase connectors of the multiphase electric power supply, wherein each of the phase connectors provides an alternating or sinusoidal current, the different currents being phase shifted by a phase shift particularly corresponding to 360° divided by the number of the phase connectors. Furthermore, in this case, the electrically conducting interconnection element electrically interconnecting the outlet sections of the heating tubes realizes a star bridge such that a voltage at the interconnection element becomes zero, unless there are phase shifts. As mentioned below as well in more detail, the interconnecting element may be connected to a neutral conductor of the multiphase electric power supply.

In other embodiments as proposed herein, the power supply is configured to supply a direct current, and the different electric connectors are two connectors configured to provide two electric potentials with a potential difference. Particularly, the electric potentials may be a positive potential and a negative potential provided at the two connectors. In this case, the electrical interconnecting element provides an electrically conductive connection between the connectors to close an electric circuit such as a current may flow (in a technical current direction), e.g., from the connector with the positive potential via one heating tube, the interconnecting element, and a further heating tube back to the negative potential. In this case, the electrical interconnection element and/or the part of the heating tubes downstream of the electrical interconnection element is electrically grounded. Hence, the electrical interconnection element and/or the part of the heating tubes downstream of the electrical interconnection element has an electrical potatial of 0 V and an electrical current flow via the part of the heating tubes downstream of the electrical interconnection element into the remainder of the process plant can be avoided.

While a focus of the subsequent description is placed on embodiments including a multiphase alternating current electric power supply, it should be understood that the corresponding explanations may also relate to embodiments including a direct current electric power supply, as just described, if technically compatible or advantageous.

In certain embodiments as proposed herein, the inlet sections are connected to the current connectors of the electric power supply inside, or outside of, the heating chamber. In the former case, a still lower temperature is generally present at the position of the current feed, while in the latter case, no tube sections carrying electrical currents are present outside the heating chamber.

In certain embodiments as proposed herein, the outlet sections of the heating tubes are interconnected by an electrical interconnection element inside the heating chamber. This allows, in case of a multiphase power supply, for an equalization of electrical currents within the heating chamber, also avoiding sections of tubes carrying electrical currents outside the heating chamber. If a direct current electric power supply is used, this allows keeping all metallic parts carrying electrical currents within the heating chamber, out of the reach of human operating personnel.

In certain embodiments as proposed herein, such an electrical interconnection element of the outlet sections of the heating tubes inside the heating chamber can also have the additional function of combining the separate flows of multiple parallel reaction tubes to a combined process stream discharged from the heating chamber. This allows for a function integration of, on the one hand, the equalization of electrical currents within the heating chamber and, on the other hand, combining the separate process streams of multiple heating tubes to a single process stream.

In certain embodiments as proposed herein, the outlet sections of the heating tubes are interconnected by an electrical interconnection element outside of the heating chamber. This allows, in case of a multiphase power supply, for an equalization of electrical currents at lower temperatures compared to the temperature levels inside the heating chamber, and a selection of less temperature-resistant materials for the electrical interconnection element. The same applies, mutatis mutandis, to embodiments wherein a direct current power supply is used.

In certain embodiments as proposed herein, the intermediate sections of the heating tubes comprise one or more return bends within the heating chamber. These return bends may have the same wall thickness as the straight segments of the corresponding heating tube or have a smaller or a larger wall thickness. The wall thickness along the circumference and/or along the centreline of the return bends may vary in certain embodiments. In addition, the centreline of the return bends of a heating tube may be arranged in the same two-dimensional plane as the centrelines of the straight segments of the same heating tube. Alternatively, the centreline of the return bends of a heating tube can protrude outside of this plane defined by the centreline of the straight segments of the corresponding heating tube, enabling a higher bending radius that enables the fabrication of the return bends utilizing inductive bending and, hence, enabling a thinner wall thickness of the return bends compared to, e.g., static casting. The application of return bends along the heating tubes may be in particular advantageous for embodiments including steam-cracking reactions as it allows for increasing the heated tube length within the heating chamber while still using a standard tube length for the individual straight segments of the heating tubes. In other embodiments, the inlet sections, the intermediate sections and the outlet sections are arranged around a straight longitudinal axis, as might be the case for steam reforming.

In certain embodiments according to the solutions proposed herein, the heating tubes may be provided in one or more tube sets, e.g. 1, 2, 3, 4, 5 or more than 5 tube sets, each of the tube sets comprising a number of heating tubes. In case of a multiphase alternating current electrical power supply the number of the heating tubes of a tube set corresponds to a number of electrical connectors of the multiphase alternating current electrical power supply, which is equal to the number of phases of the multiphase alternating current electrical power supply, e.g. 3, 4 or 5 phases. Hence, the heating tubes of each tube set are connected to exactly one of the electrical phases of the multiphase alternating current electrical power supply at their inlet sections, the phases being different for each of the heating tubes of each tube set, and the heating tubes of each tube set are electrically interconnected by an electrically conducting interconnection element at their outlet sections. Correspondingly, if a direct current power supply is used, each of the tube sets may include two heating tubes between which an electrical circuit is closed, as explained above, by the electrical interconnecting element. If two or more tube sets are used, in this case, one of the heating tubes of each tube set may parallely be connected to one of the current connectors and the other one of the heating tubes of each tube set may be connected to the other one of the current connectors. All heating tubes may be interconnected by the interconnecting elements.

In certain embodiments, the gas enters the inlet sections of the heating tubes in a temperature range between ambient temperature and 700 °C, particularly between 150 °C and 675 °C, particularly between 200 °C and 650 °C, particularly between 250 °C and 625 °C and for example in a temperature range between 350 °C and 600 °C.

In certain embodiments as proposed herein, the outlet sections of the heating tubes are connected to the inlet side of the effluent passage of a feed-effluent heat exchanger via an interposed conventional quench cooler, the term "conventional quench cooler" referring to any type of quench cooler as used in gas-phase reactions such as steam cracking or steam reforming, particularly to a transfer line exchanger (TLE). In other embodiments as proposed herein, the outlet sections of the heating tubes are directly connected to the inlet side of the effluent passage of a feed-effluent heat exchanger for cooling the gas withdrawn from the heating tubes, particularly a reaction effluent if a chemical reaction is performed within the heating tubes, without an interposed conventional quench cooler. In other embodiments as proposed herein, the outlet sections of the heating tubes are connected to a second conventional quench cooler via an interposed feed-effluent heat exchanger and/or an interposed first conventional quench cooler. In such embodiments, the gas may be supplied to the inlet sections of the heating tubes at the same temperature as in conventional solutions, so that one or more additional feed preheaters, which can be electrically powered or heated by a process stream, upstream of the inlet sections of the heating tubes may be required in order to reach the inlet temperatures of conventional solutions.

In certain embodiments as proposed herein, which include performing a chemical reaction in the heating tubes, this reaction may only take place at certain temperatures known to the skilled person, which may be as high as 800 °C in certain cases. In such a case, the inlet temperature conditions, i.e. the temperatures at which the gas is supplied to the inlet sections of the heating tubes, may be selected to be lower than 800 °C, lower than 700 °C, lower than 600 °C, lower than 500 °C, lower than 400 °C, or lower than 300 °C, and particularly higher than 100 °C. In other embodiments, where the reaction may only take place at temperatures above 700 °C and the inlet temperature conditions may be selected to be lower than 700 °C, lower than 600 °C, lower than 500 °C, lower than 400 °C, lower than 300 °C, and particularly higher than 100 °C. In other embodiments, the reaction may only take place at temperatures above 600 °C and the inlet temperature conditions may be selected to be lower than 600 °C, lower than 500 °C, lower than 400 °C, lower than 300 °C, and particularly higher than 100 °C. In other embodiments, the reaction may only take place at temperatures above 500 °C and the inlet temperature conditions may be selected to be lower than 500 °C, lower than 400 °C, or lower than 300 °C, and particularly higher than 100 °C. In more general terms, the reaction may take place in a first temperature range and the gas may be supplied to the inlet sections of the heating tubes in a second temperature range below the first temperature range by a temperature delta of at least 10, 20, 50, 100, 200 or 500 K. This means the reaction feed may be supplied to the inlet sections of the heating tubes at temperature conditions at which the reaction does not yet occur. That is, the gas is supplied to the heating tubes at a deliberately lower temperature as in conventional solutions. Selecting lower inlet temperatures simplifies the design of the galvanic separation and has some other advantages as described further below.

In certain embodiments as proposed herein, the outlet sections of the heating tubes are connected to the inlet side of the effluent passage of a feed-effluent heat exchanger via an interposed conventional quench cooler. In other embodiments as proposed herein, the outlet sections of the heating tubes are directly connected to the inlet side of the effluent passage of a feed-effluent heat exchanger for cooling the reaction effluent without an interposed conventional quench cooler. In other embodiments as proposed herein, the outlet sections of the heating tubes are connected to a second conventional quench cooler via an interposed feed-effluent heat exchanger and/or an interposed first conventional quench cooler. In such embodiments, the reaction gas may be supplied to the heating tubes at a deliberately lower temperature as in conventional solutions. This means, as discussed above, that a reaction feed to a chemical reaction may be supplied to the inlet sections of the heating tubes at temperature conditions, for which the reaction does not yet occur. In such embodiments, the complete (pre-)heating or a part of the (pre-)heating of the reaction gas is performed within the heating tubes, so that at least one, or even two, or even all additional feed preheaters upstream of the inlet sections of the reaction tubes, which are heated electrically and/or by a process stream, and which may be required for solutions with conventional heating tube inlet temperatures, can be omitted. Hence, such embodiments enable a significant reduction of capital expenses (CAPEX) compared to embodiments with conventional heating tube inlet temperatures. Such embodiments are further explained below in connection with steam cracking.

A method for heating a gas, wherein an apparatus as discussed above is used, is also proposed herein. In the proposed method, the gas is subjected to a preheating step to have a preheating temperature, the gas is thereafter supplied, at the preheating temperature, to the heating tubes, and the gas is further heated in the heating tubes.

In certain embodiments as proposed herein, the gas is a feed gas comprising one or more hydrocarbons, and the one or more hydrocarbons is or are subjected to a catalytic or non-catalytic conversion in the heating tubes to form one or more product compounds. Said conversion may particularly be steam cracking or reforming of the one or more hydrocarbons.

In conventional methods for steam cracking or steam reforming, the preheating temperature is typically in the range 600 °C or higher. In certain embodiments as proposed herein, the preheating temperature is below 600 °C, below 500 °C, below 400 °C, or below 300 °C, i.e. this temperature is deliberately lower than in conventional methods for steam cracking or reforming. The lower preheating temperatures may particularly be obtained by only preheating the gas in the feed passage of a feed-effluent heat exchanger, particularly omitting a further preheating, e.g. by a heat exchanger heated electrically or by a process stream, thereafter.

For further details and advantages of the proposed method and its embodiments, reference is made to the explanations above and below relating to the proposed apparatus and its embodiments.

### Figures

Aspects of certain embodiments disclosed herein will now further be described with reference to the appended drawings, wherein
Figure 1 schematically illustrates a reactor for performing a chemical reaction;
Figure 2 schematically illustrates a reactor for performing a chemical reaction according to an embodiment proposed herein;
Figure 3 schematically illustrates a reactor for performing a chemical reaction according to an embodiment proposed herein;
Figure 4 schematically illustrates a reactor for performing a chemical reaction according to an embodiment proposed herein;
Figure 5 schematically illustrates a reactor for performing a chemical reaction according to an embodiment proposed herein;
Figure 6 schematically illustrates a reactor for performing a chemical reaction according to an embodiment proposed herein;
Figure 7 schematically illustrates a reactor for performing a chemical reaction according to an embodiment proposed herein; and
Figures 8a to 8c schematically illustrate aspects of a reactor for performing a chemical reaction according to an embodiment proposed herein.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, arrangements, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive.

It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

Aspects disclosed herein are suitable for all processes and designs of heated reaction tubes and reactors comprising such heated reaction tubes. Examples of such processes are steam cracking, certain embodiments of reforming processes, and dehydrogenation of alkanes, as described in the articles "Ethylene", "Gas Production" and "Propene" in Ullmann's Encyclopedia of Industrial Chemistry, for example as published online on 15 April 2009, DOI: 10.1002/14356007. a10_045.pub2, 15 December 2006, DOI: 10.1002/14356007.a12_169.pub2, and 15 June 2000, DOI: 10.1002/14356007.a22_211.

As mentioned at the outset, however, aspects disclosed herein may also be suitable for mere gas heating applications, where "gas" may include any gaseous medium including components such as, but not limited to, hydrogen, oxygen, nitrogen, carbon monoxide, hydrocarbons, a noble gas, steam or any combination or mixture of such components.

The heating tubes of the apparatus as just mentioned, including reactors or heaters, are conventionally heated by using fuel gas combusted in burners. The heating tubes are guided through a combustion chamber in which the burners are also arranged, and conventional reactors or heaters of such a configuration are therefore also referred to as "fired" reactors or heaters herein.

As mentioned at the outset, there is an increasing demand for operating reactors and heaters with no or reduced local carbon dioxide emissions. However, this demand cannot be met by processes in which fired reactors and heaters are used, due to the combustion of typically fossil fuels. Therefore, electrification of such reactors or heaters has been proposed, as also mentioned at the outset, and aspects thereof will now be described in further detail with reference to prior publications.

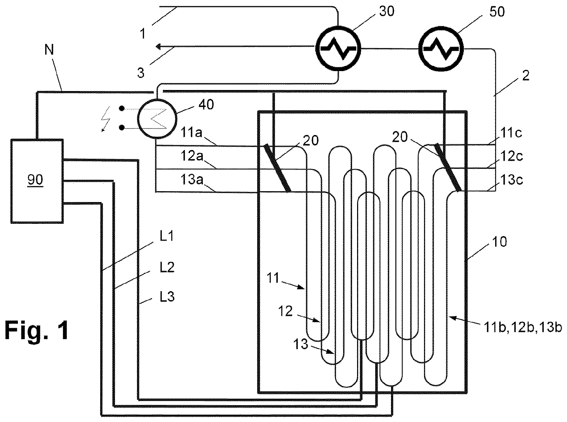

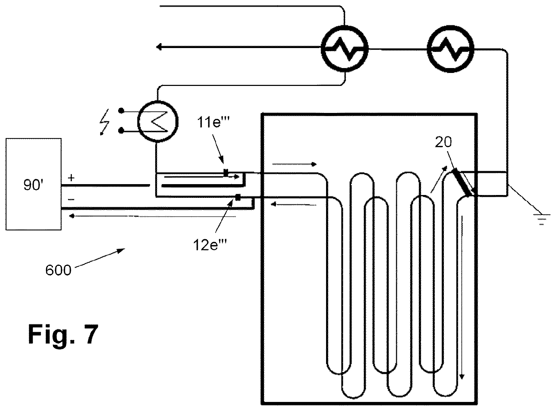

In the solutions proposed herein, a multiphase electric power supply is used for electrification of a reactor or heater, wherein a number of phases of the multiphase electric power supply may particularly be 2, 3, 4, or 5. Each of the phases of the multiphase electric power supply may particularly be provided as a sinusoidal current, and the different sinusoidal currents may be phase-shifted by a phase-shift of 360° divided by the number of phases. Each of the sinusoidal currents is provided using an individual phase connector or conductor, typically in the form of an individual busbar or cable, such as a litz wire, a finely stranded wire, or a massive wire, as required in view of the currents to be carried, and in a suitable cross section. Additionally, to the phase connectors or conductors, a neutral conductor may be provided. As mentioned above, the present disclosure may relate to embodiments including multiphase alternating current electric power supplies but also direct current power supplies. Embodiments including multiphase electric power supplies are explained in relation to Figures 1 to 6 while an embodiment including a direct current power supply is shown in Figure 7.

Electrical heating concepts with dedicated heating elements located inside the heating chamber may be favorable for heating applications without reactions and with temperatures below, e.g., 400 °C. However, these concepts have proven to be difficult in design for increasing temperatures like for example above 400 °C, or even above 600 °C, and particularly in environments where reactions occur. Under these conditions, a reaction or heating tube arrangement as proposed herein has been proven to be advantageous. In the context of reaction or heating tube electrification, in embodiments proposed herein, the actual process or heating tubes are being utilized as resistive heating elements, also referred to as direct resistive heating.

WO 2015/197181 A1 discloses a reactor in which a fluid flowing through a reaction tube is heated, the reaction tube comprising an electrically conductive material and being connected to several phases of an alternating current source so that an electrical star connection is formed. Heat is generated by Joule heating due to the electrical resistance of the material of the reaction tube. Further configurations of electrified reactors are disclosed in WO 2021/160614 A1 and WO 2021/160777 A1.

In WO 2022/096180 A1, in particular, an electrical interconnection of reaction tubes at their inlet and outlet sections within a reactor vessel is proposed, wherein one phase of a three-phased electrical current is applied to a central portion of each of the reaction tubes, such that a star bridge is formed.

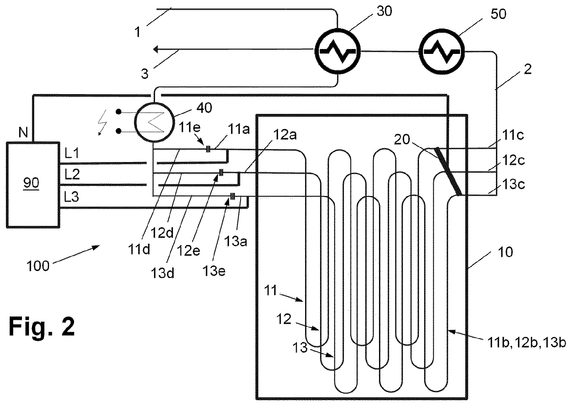

A configuration of a reactor of such a configuration is schematically illustrated in Figure 1, in which a heating vessel or chamber, which may be provided as a thermally insulating structure, is indicated 10. Heating tubes 11, 12, 13 are passed through the heating chamber 10 such as to comprise return bends within the heating chamber 10. This is generally also the case for apparatus 100 to 500 according to aspects as proposed herein, which are illustrated in Figures 2 to 6. The embodiments shown in Figures 1 to 6 may be configured to perform certain chemical reactions such as steam cracking, in which case the heating tubes 11, 12, 13 are provided as reaction tubes and the apparatus 100 to 500 may be a reactor for performing the reaction.

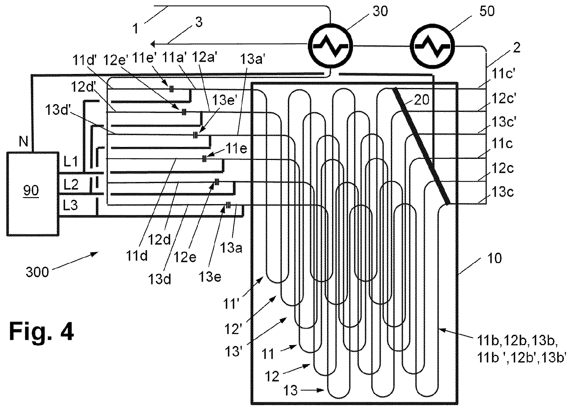

Embodiments as proposed herein are not limited by the presence or number of return bends of the heating tubes 11, 12, 13, and the heating tubes 11, 12, 13 may also be straight heating tubes without return bends in the heating chamber 10. Each of the heating tubes 11, 12, 13 may also represent a group of heating tubes, and the number of heating tubes 11, 12, 13 may correspond to a number of phases of an electrical current, to which each heating tube 11, 12, 13 is individually assigned. While three heating tubes 11, 12, 13, are illustrated in Figures 1 to 3, also this number is in no way intended to limit embodiments proposed herein, and in Figures 4 to 6, six heating tubes are shown as, likewise non-limiting, examples.

For ease of reference, the heating tubes each comprise an inlet section 11a, 12a, 13a, an outlet section 11c, 12c, 13c, and an intermediate section 11b, 12b, 13b arranged between the inlet section 11a, 12a, 13a and the outlet section 11c, 12c, 13c. The intermediate sections 11b, 12b, 13b of the heating tubes 11, 12, 13 are arranged completely in the heating chamber 10 and are commonly referred to in the Figures with a single arrow, while the inlet sections 11a, 12a, 13a and the outlet sections 11c, 12c, 13c of the heating tubes 11, 12, 13 may be placed partially, or also completely, in the heating chamber 10. Particularly, the inlet sections 11a, 12a, 13a and the outlet sections 11c, 12c, 13c may be passed through a wall of the heating chamber 10.

In the configuration shown in Figure 1, three phases or phase conductors L1, L2, L3 of a multiphase power supply 90 are connected to a central portion, i.e. to the intermediate sections 11b, 12b, 13b, of the heating tubes 11, 12, 13 using an electric connection suitable for the conditions, such as the local temperature, at the central portion of the heating tubes 11, 12, 13. Generally, if reference to phases or phase conductors is made herein, this includes all suitable forms of electrical connectors. Options for providing such connections are discussed, e.g., in WO 2021/214256 A1. At their inlet and outlet ends, i.e. at the inlet sections 11a, 12a, 13a and at the outlet sections 11c, 12c, 13c, and still within the heating chamber 10, the heating tubes 11, 12, 13 are interconnected by electrical interconnection elements 20 or "star bridges", as for example discussed in WO 2021/160614 A1. The electrical interconnection elements 20 may be connected to a neutral conductor N of the multiphase power supply, but the presence of a neutral conductor N is purely optional.

A feed gas stream in a passage 1, at a temperature of e.g. 250 °C, is, in case of a reaction being performed in the apparatus shown in Figures 1 to 6, heated in the feed passage of a feed-effluent heat exchanger 30 to a temperature of e.g. 480 °C, is thereafter further heated in an electric heater 40 to a temperature of e.g. 620 °C, and is ultimately split by a header not specifically indicated and distributed to the heating tubes 11, 12, 13 at their inlet sections 11a, 12a, 13a.

A process gas stream in a passage 2 is withdrawn from the heating tubes 11, 12, 13 at their outlet sections 11c, 12c, 13c at an outlet temperature of e.g. 850 °C, rapidly cooled or quenched in a quench cooler 50 to a temperature of e.g. 600 °C and thereafter further cooled in the effluent passage of a feed-effluent heat exchanger 30 to a temperature of e.g. 400 °C to form a product stream in a passage 3 which may be further treated or processed as needed.

In order to avoid galvanic separation in the process pipework, the solution illustrated in Figure 1 uses a star bridge in the form of the electrical interconnection element 20 at the inlet sections 11a, 12a, 13a and outlet sections 11c, 12c, 13c of the heating tubes, and an electrical connection to conductors L1, L2, L3 at the centre of the intermediate sections 11b, 12b, 13b of the heating tubes 11, 12, 13. Due to the position of the electrical connection to the conductors L1, L2, L3, the current supplied at the electrical connection, e.g. 4000 A, splits into two parallel currents of each approx. 2000 A, each of the currents flowing towards the interconnecting elements 20. This causes various design challenges, which are explained below.

The lower the electrical current in the two parallel electrical branches, the longer the heating tubes 11, 12, 13 must be (with otherwise identical dimensions) suitable to provide the desired power via resistive heating. Hence, to limit the length of the heating tubes, e.g. to facilitate their handling or to limit the residence time of the gas being heated, high electrical currents are required. Since the electrical control devices and/or electrical feed switches on the market are only available up to a certain current/amperage, an additional transformer downstream of the electrical control devices and/or electrical switches and upstream of the electrical connections L1, L2, L3 may need to be used to provide the correspondingly high electrical currents to the electrical connections. High currents supplied via the electrical connections L1, L2, L3 also lead to electrical conductors, such as busbars or cables, with large cross-sections.

It is also difficult to realise a varying heat input along the flow path of the gas to be heated within the heating tubes 11, 12, 13, as desired in some cases, by adapting the wall thickness of the heating tubes 11, 12, 13 in specific sections along the flow direction of the gas to be heated, since the heating tubes 11, 12, 13 are supplied by two electrical branches in parallel connection along the flow direction of the gas to be heated. A resistance change in one branch inevitably leads to a change in the magnitude of the electrical current and, hence, to a change of the heat release due to resistive heating in the second branch as well.

In the solution illustrated in Figure 1, the length of the heating tubes 11, 12, 13 is limited, e.g. to facilitate the handling of the heating tubes or to limit residence time of the gas to be heated inside the heating tubes, and thus the electrical resistance of the two parallel electrical branches is limited. To release a certain amount of heat via resistive heating, a certain amount of electric current is required to flow through the parallel electrical branches of the reaction tubes 11, 12, 13. As the current is fed to the centre of the heating tubes 11, 12, 13 at their intermediate sections 11b, 12b, 13b, the voltage difference required to drive the current for adequate resistance heating, which may be as low as below 400 V, below 200 V, below 100 V, or even below 50 V, is small compared to an ordinary nominal supply voltage of e.g. 690 V, 3-phase, or 400 V, 3-phase. As the use of a significantly reduced voltage compared to an ordinary nominal supply voltage is necessary, additional transformers are required.

It would be more cost-effective and efficient to supply the heating tubes 11, 12, 13 with an ordinary nominal supply voltage of 690 V, 3-phase, or 400 V, 3-phase, or at least with an increased supply voltage, which may be larger than 50 V, larger than 100 V, larger than 200 V, or even, as mentioned before, equal to 400 V or 690 V, since additional electrical equipment such as transformers could then be reduced in size or even be completely omitted. The use of a reduced electrical current to supply the heating tubes 11, 12, 13 via the electrical connections L1, L2, L3 would also be advantageous because the electrical conductors, such as cables and busbars, could then be dimensioned with smaller cross-sections.

In an example according to Figure 1, the electric current supplied via the electrical connections L1, L2, L3 is limited to approximately 4000 A for an ordinary electrical supply voltage of, e.g. 400 V, 3-phase, and after the distribution, only 2000 A are available for electrical resistance heating in the two parallel electrical branches. The heat release Q due to electrical resistance heating (Joule heating) is given by the equation Q = R × I² (where R is the electrical resistance, and I is the electrical current). Hence, without splitting the electrical current and, hence, utilizing the full supply current of approximately 4000 A, a quadrupling of the power input would be possible for the same tube length, or only half the electrical current strength would have to be provided for the same heat release.

Furthermore, in the configuration illustrated in Figure 1, the connection of the connectors L1, L2, L3 to the heating tubes 11, 12, 13 at the intermediate sections 11b, 12b, 13b is located at a point that is already very hot, so that significant heat losses due to thermal conduction from the heating chamber via the electrical connectors L1, L2, L3 into the electrical supply system are to be expected. A separate feed-through through the wall of the heating chamber 10 is required for the electrical connection and the connection elements are in heat radiation exchange with the heating chamber 10. To protect the electrical connection elements from overheating in the feed-through, heat must be dissipated to the outside. This leads to a high level of complexity with regard to a cooling arrangement for the electrical connections and to heat losses.

These design challenges are addressed, and the corresponding advantages are provided, by introducing a galvanic separation at the inlet of the heating tubes 11, 12, 13 to be heated, as illustrated in Figures 2 to 6.

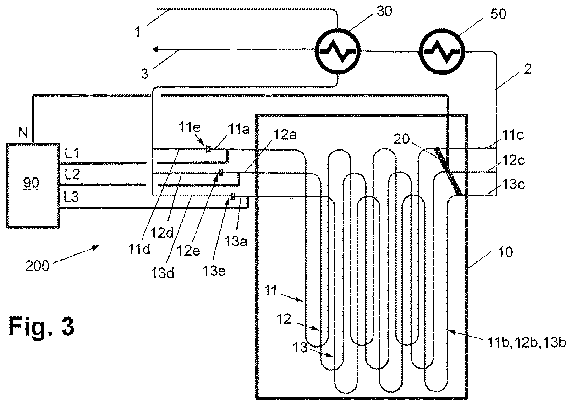

In the embodiments 100 and 200 as shown in Figures 2 and 3, the heating tubes 11, 12, 13 are still connected at an outlet end thereof, i.e. at the outlet sections 11c, 12c, 13c, and still in the heating chamber 10, with an electrical interconnecting element 20, which may optionally be connected to the neutral conductor N. However, the heating tubes 11, 12, 13 are not electrically connected to the conductors L1, L2, L3 at their centre, i.e. at the intermediate sections 11b, 12b, 13b, but rather at the inlet sections 11a, 12a, 13a thereof, and inside (not explicitly shown) or outside (as shown in Figure 2 and 3) the heating chamber 10. Further upstream, each of the heating tubes 11, 12, 13 is connected to an upstream tube section 11d, 12d, 13d via an electrically insulating connector 11e, 12e, 13e, e.g. in the form of an insulating flange, such as to provide a galvanic separation.

With the introduction of a galvanic separation by the electrically insulating connectors 11e, 12e, 13e between the inlet sections 11a, 12a, 13a of the heating tubes 11, 12, 13 and the upstream tube sections 11d, 12d, 13d, the design challenges described above are addressed. The electrically insulating connectors 11e, 12e, 13e may be provided, in certain embodiments, with an electrically insulating cladding (comprising components such as a seal, a washer, and a sleeve around the screw shaft, e.g. similar to that used in gas pipelines for separation after cathodic corrosion protection). The electrically insulating connectors 11e, 12e, 13e are used at the position between the inlet sections 11a, 12a, 13a of the heating tubes 11, 12, 13 and the upstream tube segments 11d, 12d, 13d at moderate temperatures (in comparison to the temperature at the outlet sections 11 c, 12c, 13c of the heating tubes 11, 12, 13).

The electrically insulating connectors 11e, 12e, 13e prevent the flow of electric current from the inlet sections 11a, 12a, 13a of the heating tubes 11, 12, 13 via the upstream tube sections 11d, 12d, 13d in the direction of an upstream plant section (containing tubing for process media, including parts of a steel construction, etc.) despite the presence of an electrical voltage difference between the electrical conductors L1, L2, L3 and the upstream tube sections 11d, 12d, 13d, which are effectively connected to electrical earth. At the outlet sections 11c, 12c, 13c, a star bridge or electrical interconnecting element 20 is still used in accordance with previous solutions, so that direct welding of the heating tubes 11, 12, 13 to downstream sections is still possible here. The star bridge or electrical interconnecting element 20 effectively equalises the potential difference of the electrical voltages of the three connected phases of the electrical power supply (as described in detail previously), so that the outlet sections 11c, 12c, 13c of the heating tubes 11, 12, 13 do not have to be galvanically isolated. Any equalising currents flow back to the voltage source via the electrical interconnecting element 20 and the attached neutral connector N.

The electrically insulating connectors 11e, 12e, 13e are preferably placed outside of the heating chamber 10 and the electrical connection to the connectors L1, L2, L3 is made as close as possible to the insulating connectors 11e, 12e, 13e, also preferably outside of the heating chamber 10. To place the connectors 11e, 12e, 13e outside of the heating chamber 10, further galvanic isolation of the inlet pipework against the walls of the heating chamber 10 may be provided to prevent an unwanted electrical current flow through the walls of the heating chamber 10 into the steel structure.

In addition, it may be particularly advantageous to place the electrical connection to the conductors L1, L2, L3 close to the heating chamber walls to minimize the distance for electrical current flows through pipework outside of the heating chamber 10 and, hence, to minimize heat losses due to undesired resistive heating of the pipework outside of the heating chamber 10. To minimize heat losses due to undesired resistive heating, the pipework outside the furnace box downstream of the electrical connections may utilize a low resistance design, e.g. higher wall thicknesses compared to the actual heating tubes 11, 12, 13 inside the heating chamber 10, where resistive heating is explicitly desired.

Table 1 below further underlines the benefits of the configuration according to the present invention shown in Figure 2 compared to a configuration according to Figure 1. While not changing the geometry of the heating tubes and not changing the process conditions (i.e. same overall tube length and, hence, residence time, same power input, same heat input per tube area), the resistance of the electrical branch relevant for the electrical supply via the conductors L1, L2, L3 effectively doubles as the electrical connections are relocated from the intermediate tube sections 11b, 12b, 13b toward the inlet tube sections 11a, 12a, 13a. Hence, to drive the same current, which is required for keeping the power input unchanged, the voltage level at the electrical connector needs to be doubled. However, the electrical current, which needs to be supplied to the electrical connectors via the conductors L1, L2, L3 is halved. Hence, the advantages for the electrical supply system as described above can be leveraged.

**Table 1**

| Parameter | Fig. 1 | Fig. 2 |
|---|---|---|
| Current to connector | 100% | 50% |
| Voltage | 100% | 200% |
| Resistance | 100% | 200% |
| Tube length | 100% | 100 % |
| Power input | 100% | 100% |
| Average heat input per tube area | 100% | 100% |

In certain embodiments, a deliberately reduced inlet temperature at the inlet sections 11a, 12a, 13a of the heating tubes 11, 12, 13 may be selected compared to conventional reference processes, so that the execution of the galvanic isolation utilizing the insulating connectors 11e, 12e, 13e can be considerably simplified because the construction materials used may be selected for lower temperatures. In the configuration shown in Figure 2, inlet temperatures at the inlet sections 11a, 12a, 13a of the heating tubes essentially as discussed for Figure 1 may be used (i.e. 620 °C). In contrast, in the configuration shown in Figure 3, the feed stream 1 may be heated to only e.g. 480 °C, by omitting electric heater 40, and may be distributed to the heating tubes 11, 12, 13 at that temperature. The other temperatures, e.g. the coil outlet temperature of approx. 850 °C, may be the same or essentially the same as discussed before. The benefits of the reduced inlet temperature as shown in Figure 3 is explained further below at the example of a steam cracking process.

Conventional steam cracking furnaces are operated at inlet temperatures of e.g. 600 °C, which is achieved by an upstream preheating. The actual steam cracking reactions only take place at temperatures above 600 °C and, hence, only take place in the heating tubes 11, 12, 13 located inside the heating chamber 10. To facilitate galvanic isolation by insulating connectors 11e, 12e, 13e, part of the preheating may be carried out in the actual heating chamber 10, as illustrated in Figure 3. A first part of the preheating is carried out conventionally, e.g. up to 400 °C or 480 °C, such as discussed for Figure 3 above, outside the heating chamber 10. The part of the preheating between 400 and 600 °C as well as the actual steam cracking reaction at above 600 °C is carried out in the heating chamber 10. Hence, galvanic insulation by the insulating connectors 11e, 12e, 13e can now be provided at low temperatures of 400 °C instead of at elevated temperatures of 600 °C. Furthermore, the dedicated electric heater 40 (shown in Figure 2) can be avoided when reducing the inlet temperature to the heating tubes 11, 12, 13 as shown in Figure 3.

In addition to a simplification of the galvanic insulation by insulating connectors 11e, 12e, 13e and the removal of the dedicated electric heater 40, further surprising advantages may be gained, when moving from a configuration as per an embodiment according to the present invention shown in Figure 2 to a configuration as per an embodiment of the present invention according to Figure 3. These additional advantages are explained below using Table 2, which compares three configurations 3(a), 3(b), 3(c) according to Fig. 3 with a configuration according to Fig. 2. For all configurations 3(a), 3(b), 3(c), the overall power input into the heating chamber 10 is increased to 120% compared to configuration 2 to accommodate for the additional temperature increase required for the preheating between 400 °C and 600 °C now located within the heating chamber 10.

**Table 1**

| Parameter | Fig. 2 | Fig. 3 (a) | Fig. 3 (b) | Fig. 3 (c) |
|---|---|---|---|---|
| Current to connector | 50% | 52% | 55% | 100 % |
| Voltage | 200 % | 230 % | 219 % | 120 % |
| Resistance | 200% | 220 % | 200 % | 60% |
| Tube length | 100% | 110% | 100% | 30% |
| Power input | 100% | 120 % | 120% | 120 % |
| Average heat input per tube area | 100 % | 109% | 120 % | 400 % |

For configuration 3(a) the length of the heating tubes 11, 12, 13 is increased to 110% to accommodate for the additional temperature increase and heat release required for the preheating between 400 °C and 600 °C now located within the heating chamber 10.

Hence, the electrical resistance of the heating tubes 11, 12, 13, which scales approximately linear with the tube length for a constant heating tube diameter and wall thickness, is also increased by 10% (from 200% to 220%). According to Q = I² × R or I = SQRT(Q/R) respectively, the current increase required to achieve a 20 % increase in heat release is only 4% (52% for configuration 3(a) compared to 50% for configuration 2), based on the 10% higher resistance for configuration 3(a) compared to configuration 2. The current increase can be considered neglectable compared to an increase in released power of 20% and has neglectable impact on the electrical supply system, e.g. required cross section of electrical conductors. The voltage required to drive the slightly increased current increases by 15% (230% for configuration 3(a) compared to 200 % for configuration 2). This increased voltage facilitates utilizing an ordinary nominal supply voltage of e.g. 690 V, 3-phase, or 400 V, 3-phase. The heat input per surface increases to 109% for configuration 3(a) compared to 100 % for configuration 2, indicating a better utilization of the capabilities of the direct electrical resistance heater.

For configuration 3(b), which targets a compact and installation-cost-efficient electrical heater design, the length of the heating tubes 11, 12, 13 is kept the same as for configuration 2 despite integrating the preheating between 400 °C and 600 °C and, hence, additional 20% of heat release into the heater chamber 10. The power density per surface area of the heating tubes 11, 12, 13 is further increased compared to configuration 3(a), indicating an even higher utilization of the capabilities of the direct electrical resistance heater. Even without the application of longer heating tubes, the supply voltage can be increased by configuration 3(b) compared to configuration 2 (219 % vs. 200 %), which facilitates utilizing an ordinary nominal supply voltage of e.g. 690 V, 3-phase, or 400 V, 3-phase. The required current increase compared to configuration 2 (55 % vs. 50 %) can be considered neglectable compared to an increase in released power of 20% and has neglectable impact on the electrical supply system, e.g. required cross section of electrical conductors.

For configuration 3(c), the tube length is significantly shortened to approximately 30% with respect to configuration 2. Hence, the average heat input per tube area can be further maximized (400 % vs. 100 %), further compacting the system and enabling a short residence time and hence improved reaction selectivity (for the example of steam cracking).

To sum up, according to the instrumentalities proposed herein, either the required electrical currents to be supplied via the electrical supply system of an electrical heater may be significantly reduced, e.g. halved, and/or the length of the heating tubes 11, 12, 13 may be reduced to e.g. a quarter (or a mixture of both alternatives may be performed). In the case of a reaction, the reaction yields can also be increased. Provided that an ordinary nominal supply voltage of e.g. 690 V, 3-phase, or 400 V, 3-phase is targeted in some designs, the full current strength supplied by the electrical conductors L1, L2, L3 of e.g. 4000 A can now be applied to the heating tubes 11, 12, 13, which leads to a significant reduction in the necessary length of the heating tubes 11, 12, 13. In addition, the electrical connection may be located outside the heating chamber 10 at moderate temperatures. This ensures that heat losses via the electrical connections are minimized or even completely avoided compared to prior art.

In embodiments according to the present invention, the electrical connection to the conductors L1, L2, L3 is located at the inlet section of the heating tubes 11a, 12a, 13a and, hence, cooled by the cool process medium entering the electrical heater, which means that the heat, which is unavoidably generated by electrical resistance heating (Joule heating) in the electrical connection can also be utilised to a large extent as it is guided into the cool process medium by thermal conduction. Furthermore, the dimensions of the heating tubes 11, 12, 13 can now be changed as required along the flow direction, making it easy to adjust the local power release along the flow path of the process medium to the actual and local heat demand of the process. For example, a higher heat flux density can be used at lower process temperatures than at higher temperatures, which can be achieved by locally increasing the resistance, e.g. by reducing the local wall thickness of the heating tube. This may be relevant in the case of reactors, e.g. for steam cracking or steam methane reforming, where the activation energy has to be provided at the inlet, while at the outlet only heat losses have to be compensated, or the reaction product has to be heated.

No matter if the actual electrical connection is located inside or outside of the heating chamber 10, it can be designed in a simplified manner due to the lower temperatures, the better cooling possibilities and the eventually lower electrical current strengths, which apply to the present invention. The electrically insulating connector 11e, 12e, 13e at the inlet also allows the electrical connection to the conductors L1, L2, L3 to be connected to the inlet section of the heating tubes 11a, 12a, 13a outside the heating chamber 10, avoiding the need for a separate wall feed-through. This greatly simplifies the design of the heating chamber 10 and reduces the effort required for sealing.

According to the present invention, there is no longer any parallel flow of electrical current toward multiple star bridges or electrical connecting elements 20 within neighbouring segments of a heating tube connected to a phase L1, L2, L3 of the electrical power supply, which tends to have a positive influence on the inductivity of the electrical system, i.e. a reduction of the inductivity. This invention provides for the use of an electric power supply with more than one phase, for example three phases, so that, for example, three process tubes are connected to an electrical interconnection element or star bridge 20 at the outlet.

Furthermore, according to aspects as proposed herein, a deliberately low inlet temperature of, for example, 600°C, 550°C, 500°C, 450°C, 400°C, or even temperatures close to ambient temperature may be used. These aspects clearly distinguish it from the prior art.

Figure 4 illustrates an embodiment 300 which differs from the embodiment shown in Figure 3 essentially in that six, instead of three, heating tubes 11, 12, 13 are provided. The heating tubes are arranged in two sets of each three heating tubes. Just for reference purposes, one set of heating tubes is labelled 11, 12, 13 and a further set of heating tubes is labelled 11', 12', 13', and repeated explanations are omitted for conciseness. This also applies to the further components labelled with reference numerals comprising inverted commas. The phase conductors L1, L2, L3 are split to parallelly supply the heating tubes 11 and 11', 12 and 12', 13 and 13'. All heating tubes 11, 11', 12, 12', 13, 13' are interconnected by one electrical interconnecting element 20. It goes without saying that the preheating configuration, in embodiment 300, may also be provided as shown for Figure 2.

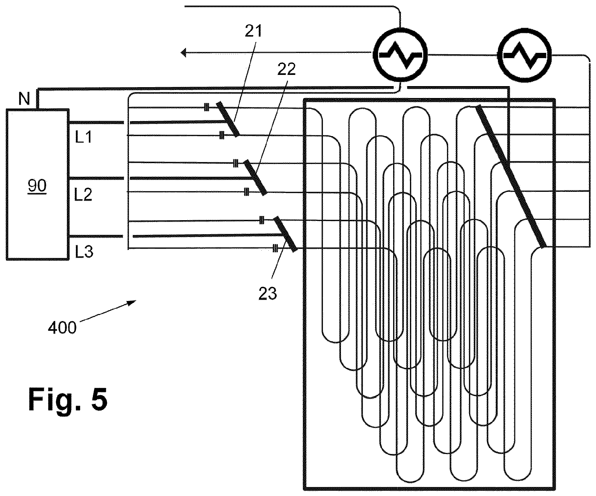

Figure 5 illustrates an embodiment 400 in which, like in embodiment 300 according to Figure 4, six heating tubes are provided. These are not labelled in Figure 5 for reasons of conciseness, as are some other components which have been explained above. In embodiment 400, the phase conductors L1, L2, L3 are connected to electrical interconnection elements 21, 22, 23 which each parallelly supply two of the heating tubes. Again, the preheating configuration, in embodiment 400, may also be provided as shown for embodiment 100 in Figure 2.

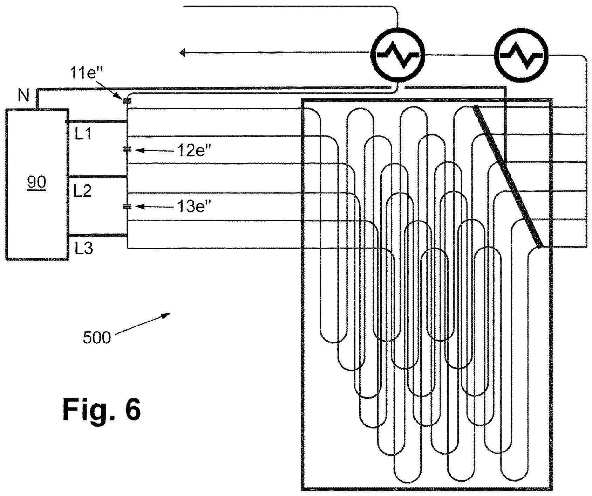

Figure 6 illustrates an embodiment 500 in which, like in embodiment 300 according to Figure 4 and the embodiment 400 shown in Figure 5, six heating tubes are provided. In embodiment 500, the phase conductors L1, L2, L3 are connected to tube connectors arranged between pairs of heating tubes, respectively, which are separated by insulating connectors 11e", 12e", 13e". Again, the preheating configuration, in embodiment 400, may also be provided as shown for embodiment 100 in Figure 2.

Figure 7 illustrates an embodiment 600 in which, different from embodiments 100 to 500 shown in Figures 2 to 6, a direct current electrical power supply 90' is used which provides a positive potential indicated by a plus sign, e.g. of +50 V, and a negative potential indicated by a minus sign, e.g. of -50 V. As before, electrically insulating fluid connectors are provided which are, in Figure 7, indicated 11e‴ and 12e‴. An electrical circuit, indicated by arrows, is closed by the electrical interconnecting element 20 and downstream thereof, an electrical grounding may be provided.

All technical details shown for one of the embodiments discussed above, if applicable and technically compatible, may be also provided in any other embodiment.

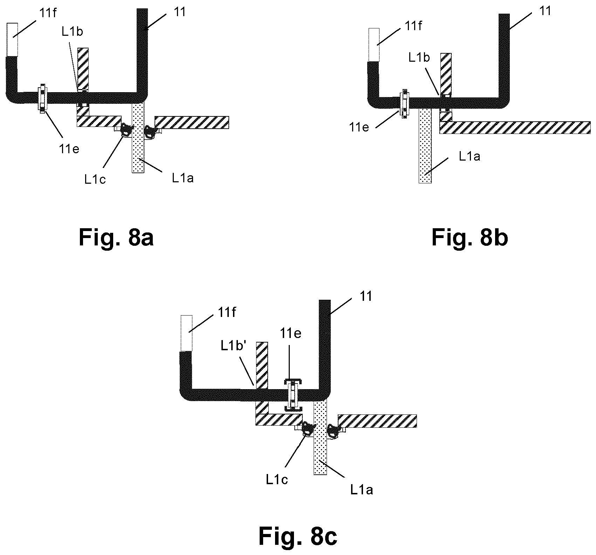

Figures 8a to 8c illustrate options for placing the electrical connectors to the conductors L1, L2, L3 within (Figures 8a, 8c) and outside (Figure 8b) of the heating chamber 10, a thermally insulating wall, which is illustrated with a diagonal hatch. A part of a heating tube is indicated with 11. The actual electrical connection to the conductor L1 is indicated by L1a. A passage through the wall of the heating chamber 10 for the electrical connection comprising an electrical or galvanic insulation is indicated by L1b. A Laval nozzle, as it may be installed in certain embodiments according to the present invention, is indicated by 11f. It goes without saying that the configuration of the other heating tubes 12, 13 may be similar or identical and that heating tube 11 is shown as an example only.

As can be seen from Figures 8a and 8c, contacting the heating tube 11 inside the heating chamber 10 requires an electrical or galvanic insulation of the electrical connection from the heating chamber walls within a passage through the wall of the heating chamber 10, as indicated by L1c. This is not required when the heating tube 11 is contacted outside the heating chamber 10, as shown in Figure 8b. If, as shown in Figure 8c, both the contacting and galvanic separation by the electrically insulating pipe connector takes place in the heating chamber 10, this may have to include a thermal shielding of the insulating connector 11e in order not to exceed the design temperatures of the applied materials of construction However, such an embodiment has the advantage that no voltage- or current-carrying structures are present outside of the reaction chamber 10 and therefore no protection measures have to be provided.

## Claims

1. Apparatus (100-600) for heating a gas, comprising a heating chamber (10) and heating tubes (11, 12, 13), wherein each of the heating tubes (11, 12, 13) comprises an inlet section (11a, 12a, 13a), an outlet section (11c, 12c, 13c) and an intermediate section (11b, 12b, 13b) arranged between the inlet section (11a, 12a, 13a) and the outlet section (11c, 12c, 13c), wherein the intermediate sections (11b, 12b, 13b) of the heating tubes (11, 12, 13) are arranged within the heating chamber (10), wherein the outlet sections (11c, 12c, 13c) of the heating tubes (11, 12, 13) are electrically interconnected by an electrically conducting interconnection element (20), wherein the inlet sections (11a, 11b, 11c) of the heating tubes (11, 12, 13) are electrically connected to different electric connectors (L1, L2, L3, +, -) of an electric power supply, and wherein the inlet sections (11a, 12a, 13a) of the heating tubes (11, 12, 13) are fluidly connected to, and electrically isolated from, upstream tube sections (11d, 12d, 13d) by electrically insulating fluid connectors (11e, 12e, 13e) providing a galvanic separation of the inlet sections (11a, 12a, 13a) of the heating tubes (11, 12, 13) and the upstream tube sections (11d, 12d, 13d).

2. The apparatus (100-500) according to claim 1, wherein the electric power supply (90) is a multiphase alternating current electric power supply, wherein the different electric connectors (L1, L2, L3) are different phase connectors of the multiphase electric power supply (90), and wherein the electrically conducting interconnection element (20) provides a star bridge.

3. The apparatus (600) according to claim 1, wherein the electric power supply (90') is configured to supply a direct current, wherein the different electric connectors (+, -) are two connectors configured to provide two electric potentials with a potential difference, and wherein the interconnecting element (20) closes an electric circuit between the electric connectors via the heating tubes (11, 12, 13).

4. The apparatus (100-600) according to any one of the preceding claims, wherein the inlet sections (11a, 12a, 13a) of the heating tubes 11, 12, 13 are connected to the electrical connectors (L1, L2, L3, +, -) of the electric power supply within, or outside of, the heating chamber (10).

5. The apparatus (100-600) according to any one of the preceding claims, wherein the outlet sections (11c, 12c, 13c) of the heating tubes (11, 12, 13) are interconnected by the electrically conducting interconnection element (20) within the heating chamber.

6. The apparatus (100-600) according to any one of the preceding claims, wherein the intermediate sections (11b, 12b, 13b) of the heating tubes (11, 12, 13) comprise one or more return bends within the heating chamber (10) or wherein the inlet sections (11a, 12a, 13a), the intermediate sections (11b, 12b, 13b) and the outlet sections (11c, 12c, 13c) are arranged around a straight longitudinal axis.

7. The apparatus (100-600) according to any one of the preceding claims, wherein the heating tubes (11, 12, 13) are provided in one or more tube sets, each of the tube sets comprising a number of heating tubes (11, 12, 13) corresponding to a number of the electrical connectors (L1, L2, L3, +, -) of the electrical power supply, wherein the heating tubes (11, 12, 13) of each tube set are connected to exactly one of the electrical connectors (L1, L2, L3, +, -) at their inlet sections (11a, 12a, 13a), the electrical connector (L1, L2, L3, +, -) being a different one for each of the heating tubes (11, 12, 13) and wherein the heating tubes of each tube set are electrically interconnected by an electrically conducting interconnection (20) element at their outlet sections (11c, 12c, 13c).

8. The apparatus (100-600) according to any one of the preceding claims, wherein the apparatus (100, 200) is configured to supply the gas to the inlet sections (11a, 12a, 13a) of the heating tubes (11, 12, 13) in a temperature range between ambient temperature and 700°C.

9. The apparatus (200-500) according to any one of the preceding claims, wherein the inlet sections (11a, 12a, 13a) of the heating tubes (11, 12, 13) are fluidly connected, via the upstream tube sections (11d, 12d, 13d), to the feed side of a feed-effluent heat exchanger (30) without an interposed further heater (40).

10. The apparatus (100-600) according to claim 9, wherein the outlet sections (11c, 12c, 13c) of the heating tubes (11, 12, 13) are fluidly connected, via one or more downstream tube sections, to the effluent side of the feed-effluent heat exchanger (30) via an interposed quench cooler (50), or wherein the outlet sections (11c, 12c, 13c) of the heating tubes (11, 12, 13) are fluidly connected, via one or more downstream tube sections, to the effluent side of the feed-effluent exchanger (30) without an interposed quench cooler (50).

11. A method for heating a gas, wherein an apparatus (100-600) according to any one of the preceding claims is used, wherein the gas is subjected to a preheating step to have a preheating temperature, wherein the gas is thereafter supplied, at the preheating temperature, to the heating tubes (11, 12, 13), and wherein the gas is further heated in the heating tubes (11, 12, 13).

12. The method according to claim 11, wherein said gas is a feed gas comprising one or more hydrocarbons, and wherein the one or more hydrocarbons is or are subjected to a catalytic or non-catalytic conversion in the heating tubes (11, 12, 13) to form one or more product compounds.

13. The method according to claim 11 or 12, wherein said conversion is steam cracking or reforming of the one or more hydrocarbons, particularly wherein the preheating temperature is in a range from ambient temperature to 700 °C.

14. The method according to any one of claims 11 to 13, wherein the preheating temperature is obtained by heating the gas in a feed-effluent heat exchanger (50).

15. The method according to any one of claims 11 to 13, wherein the preheating temperature is obtained by heating the gas in a feed-effluent heat exchanger (50) and in an additional preheater (40) located downstream of the feed-effluent heat exchanger.
